# EUROPEAN PATENT APPLICATION

(11) **EP 4 712 184 A2**
(43) Date of publication of application: **18.03.2026**
(21) Application number: 25199757.3
(22) Date of filing: 02.09.2025
(51) Int. Cl.: H01M 10/04, B23K 26/08, B23K 26/36, H01M 50/531, H01M 50/533, H01M 50/536

(54) **APPARATUS AND METHOD FOR FORMING ELECTRODE PLATE TAB PATTERN**

(30) Priority: 13.09.2024 KR 20240125798
(71) Applicant: SAMSUNG SDI CO., LTD., Yongin-si, Gyeonggi-do 17084 (KR)
(72) Inventor: JUN, Pilgoo, 17084 Yongin-si (KR); LEE, Junsub, 17084 Yongin-si (KR); CHOI, Jeongmoo, 17084 Yongin-si (KR)
(74) Representative: Marks & Clerk LLP

(57) **Abstract**

An apparatus (10) for forming an electrode plate tab pattern includes a conveying portion (100) configured to convey, in a first direction, an electrode plate (20) coated with an active material, a first pattern forming portion (200) configured to form a first tab pattern (211) on the electrode plate (20), and a second pattern forming portion (300) configured to form a second tab pattern (311) on the electrode plate (20). The first tab pattern (211) and the second tab pattern (311) are configured to be spaced apart from each other by a preset first distance.

## Description

### BACKGROUND

### 1. FIELD

The present disclosure relates to an apparatus and method for forming an electrode plate tab pattern.

### 2. DESCRIPTION OF THE RELATED ART

While primary batteries are not designed to be (re)charged, secondary (also known as rechargeable) batteries are designed to be discharged and recharged. Among secondary batteries, low-capacity secondary batteries are widely used in portable, small electronic devices, such as smart phones, feature phones, notebook computers, digital cameras, and camcorders, while high-capacity secondary batteries are widely used as power sources for driving motors in hybrid vehicles and electric vehicles, as well as for storing power (e.g., home and/or utility scale power storage). A secondary battery generally includes an electrode assembly including a positive electrode and a negative electrode, a case accommodating both electrodes, and electrode terminals connected to the electrode assembly.

Generally, the electrode of a secondary battery is formed via a process including a mixing process mixing raw materials of the electrode, a coating process applying and drying the mixed slurry to a substrate of the electrode plate, a rolling process reducing the thickness of the coated electrode, a slitting process cutting the electrode, and a notching process forming a tab on the electrode.

Prior to the notching process, a tab pattern, specifying a position where the electrode tab is to be formed, may be formed on the electrode, then the electrode tab may be formed at the position where the tab pattern is located. Conventionally, a single array of laser devices is used along a conveying apparatus transporting an electrode plate to form the tab pattern.

The information disclosed in this Background section is for enhancement of understanding of the background of the present disclosure. The section may contain information that does not constitute related (or prior) art.

### SUMMARY

Embodiments of the present disclosure provide an apparatus and method for forming an electrode plate tab pattern.

Embodiments of the present disclosure provide an apparatus for forming an electrode plate tab pattern including: a conveying portion configured to convey, in a first direction, an electrode plate coated with an active material; a first pattern forming portion configured to form a (plurality of) first tab pattern(s) on the electrode plate; and a second pattern forming portion configured to form a (plurality of) second tab pattern(s) on the electrode plate, wherein the first tab pattern(s) and the second tab pattern(s) are configured (or formed) to be spaced apart from each other by a preset first distance.

In an embodiment, the second pattern forming portion is (disposed to be) spaced apart from the first pattern forming portion in the first direction.

In an embodiment, the first tab pattern(s) and the second tab pattern(s) (are formed to) have (substantially) the same pattern.

In an embodiment, the apparatus further includes: an electrode plate moving portion configured to move the electrode plate so that the second tab pattern(s) is (or are) configured (or formed) to be spaced apart from the first tab pattern(s) by the preset first distance.

In an embodiment, the electrode plate moving portion moves the electrode plate in the first direction or a second direction opposite to the first direction.

In an embodiment, the second pattern forming portion (is configured to) output(s) (a signal for specifying) a position of (or where) the second tap pattern via (or to display) a second tab pattern line on the electrode plate, and wherein the electrode plate moving portion includes: a position sensor configured to measure a position of (or positions of) the first tab pattern(s) and a position of the second tab pattern line (formed on the electrode plate); a distance error calculation portion configured to measure a second distance between a point of the first tab pattern(s) and a point of the second tab pattern line (based on measured positions of the first tab patterns and measured position of the second tab pattern line) and configured to calculate an error between the preset first distance and the second distance; and an electrode plate movement controller configured to control the electrode plate to move in the first direction or a second direction opposite to the first direction based on the error (between the first distance and the second distance).

In an embodiment, the electrode plate movement controller includes: a feeding roller configured to be disposed on the electrode plate and move in a third direction perpendicular to (or intersecting) the first direction (and the second direction); a first driving shaft positioned (or disposed) at an end (or at opposite ends) of the feeding roller and configured to provide a vertical movement path of the feeding roller; a first driving portion configured to drive (or that vertically moves) the feeding roller upward (in the third direction) or downward (in a fourth direction); and a first driving portion controller configured to control (an operation of) the first driving portion based on the error (between the first distance and the second distance).

In an embodiment, the conveying portion includes a buffer roller configured to convey (or that moves) the electrode plate, in the first direction, by rotating in a fifth direction, and wherein the electrode plate movement controller is configured to move the feeding roller upward in the third direction (intersecting the first direction) to rotate the buffer roller in (a sixth direction opposite to) the fifth direction.

In an embodiment, the second distance is shorter than the preset first distance, and wherein (the first driving portion controller controls the first driving portion so that) the feeding roller moves upward (in the third direction).

In an embodiment, the conveying portion includes a buffer roller configured to convey (or that moves) the electrode plate, in the second direction, by rotating in a sixth direction, and wherein the electrode plate movement controller moves the feeding roller downward in the fourth direction (intersecting the second direction) to rotate the buffer roller in (a fifth direction opposite) the sixth direction.

In an embodiment, the second distance is longer than the preset first distance, and wherein (the first driving portion controller controls the first driving portion so that) the feeding roller moves downward (in the fourth direction).

In an embodiment, the first pattern forming portion includes a plurality of first laser portions disposed along a plurality of rows and a plurality of columns.

In an embodiment, the second pattern forming portion includes: a plurality of second laser portions disposed along a plurality of rows and a plurality of columns and configured to output (a signal specifying) a position of (or where) the second tab pattern(s) via (or are formed to display) a second tab pattern line on the electrode plate; a position sensor configured to measure a position (or positions) of the first tab pattern and a position of the second tab pattern line (formed on the electrode plate); a distance error calculation portion configured to measure a second distance between a point of the first tab pattern(s) and a point of the second tab pattern line (based on the measured positions of the first tab patterns and the measured position of the second tab pattern line) and configured to calculate an error between the preset first distance and the second distance; and a second laser portion movement controller configured to control the (plurality of) second laser portions to move in the first direction or a second direction opposite to the first direction based on the error (between the first distance and the second distance).

In an embodiment, the second laser portion movement controller includes: a second driving shaft connected to the (plurality of) second laser portions and configured to provide a horizontal movement path to the (plurality of) second laser portions; a second driving portion configured to drive (or that horizontally moves) the (plurality of) second laser portions in the first direction or the second direction; and a second driving portion controller configured to control (an operation of) the second driving portion based on the error (between the first distance and the second distance).

In an embodiment, the second distance is shorter than the preset first distance, and wherein the plurality of second laser portion moves in the second direction.

In an embodiment, the second distance is longer than the preset first distance, and wherein the plurality of second laser portions moves in the first direction.

Embodiments of the present disclosure provide a method for forming an electrode plate tab pattern including: conveying, in a first direction via a conveying portion, an electrode plate coated with an active material; forming, via a first pattern forming portion, a (plurality of) first tab pattern(s) on the electrode plate; and forming, via a second pattern forming portion, a (plurality of) second tab pattern(s) on the electrode plate, wherein the first tab pattern(s) and the second tab pattern(s) are spaced apart by a preset first distance.

In an embodiment, the forming the second tab pattern(s) includes: outputting (a signal for specifying) a position of the second tab pattern(s) via (or are formed to display) a second tab pattern line on the electrode plate; measuring a position (or positions) of the first tab pattern(s) and a position of the second tab pattern line (formed on the electrode plate); measuring a second distance between a point of the first tab pattern(s) and a point of the second tab pattern line (based on the measured positions of the first tab patterns and the measured position of the second tab pattern line) and calculating an error between the preset first distance and the second distance; and controlling the electrode plate to move in the first direction or a second direction opposite to the first direction based on the error (between the first distance and the second distance).

In an embodiment, the conveying portion comprises a buffer roller conveying (or that rotates clockwise or anti-clockwise to move) the electrode plate in the first direction or the second direction, and wherein the controlling includes: disposing a feeding roller that moves in a third direction perpendicular to the first direction (or intersecting the first direction and second direction on the electrode plate); and moving the feeding roller in the third direction or in a fourth direction opposite to the third direction (or to rotate the buffer roller clockwise or anti-clockwise) based on the error (between the first distance and the second distance).

In an embodiment, the forming of the second tab patterns includes: outputting (a signal for specifying) a position of (or where) the second tab pattern via (or are formed to display) a second tab pattern line on the electrode plate; measuring a position (or positions) of the first tab pattern(s) and a position of the second tab pattern line (formed on the electrode plate); measuring a second distance between a point of the first tab pattern and a point of the second tab pattern line (based on the measured positions of the first tab patterns and the measured position of the second tab pattern line) and calculating an error between the preset first distance and the second distance; and controlling a plurality of second laser portions comprised in the second pattern forming portion to move in the first direction or a second direction opposite to the first direction based on the error (between the first distance and the second distance).

According to some embodiments of the present disclosure, a plurality of pattern forming portions may be disposed to be spaced apart from each other, so that tab patterns may be simultaneously formed on an electrode plate at regular intervals. Through this, it is possible to increase the efficiency of the process of forming the tab pattern of the electrode plate.

According to some embodiments of the present disclosure, the tab patterns may be formed at regular intervals by correcting the positions at which the tab patterns may be formed on the electrode plate.

At least some of the above and other features of the invention are set out in the claims.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 shows an apparatus for forming an electrode plate tab pattern according to embodiments of the present disclosure.
FIG. 2 shows an apparatus for forming an electrode plate tab pattern according to embodiments of the present disclosure.
FIG. 3 shows a configuration of an electrode plate moving portion according to embodiments of the present disclosure.
FIG. 4 shows a configuration of an electrode plate movement controller according to embodiments of the present disclosure.
FIG. 5 shows calculating the error between the first distance and the second distance according to embodiments of the present disclosure.
FIG. 6 shows calculating the error between the first distance and the second distance according to embodiments of the present disclosure.
FIG. 7 shows calculating the error between the first distance and the second distance according to embodiments of the present disclosure.
FIG. 8 shows an apparatus for forming an electrode plate tab pattern according to embodiments of the present disclosure.
FIG. 9 shows a configuration of a second pattern forming portion according to embodiments of the present disclosure.
FIG. 10 shows a configuration of a second laser movement controller according to embodiments of the present disclosure.
FIG. 11 is a flowchart showing a method for forming an electrode plate tab pattern according to embodiments of the present disclosure.
FIG. 12 is a flowchart showing a method for forming a second tab pattern on an electrode plate according to embodiments of the present disclosure.
FIG. 13 is a flowchart showing a method for forming a second tab pattern on an electrode plate according to embodiments of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

The embodiments described herein can be explained with reference to cross-sectional views and/or plain views as example views of the present disclosure. In the drawing, the thicknesses of films and regions can be exaggerated for effective description of technical contents. Thus, regions presented as an example in the drawings have general properties, and shapes of the exemplified areas can be used to illustrate a specific shape of a device region. Therefore, this should not be construed as limited to the scope of the present disclosure. Although the terms such as first, second, and third are used to describe various components in various embodiments herein, the components should not be limited to these terms. These terms are used only to distinguish one component from another component. Embodiments described and exemplified herein include complementary embodiments thereof. Like reference numerals refer to like elements throughout the specification.

As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

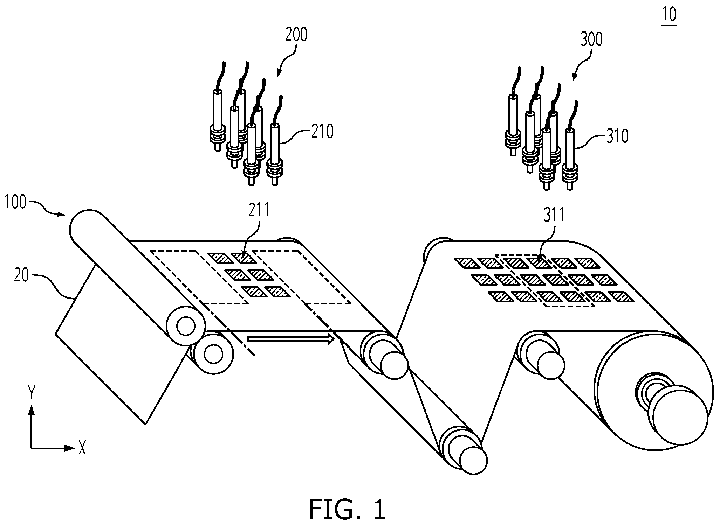

FIG. 1 shows an apparatus 10 for forming an electrode plate tab pattern according to embodiments of the present disclosure.

An apparatus 10 for forming an electrode plate tab pattern may include a conveying portion 100, a first pattern forming portion 200, a second pattern forming portion 300, and the like.

The apparatus 10 for forming the electrode plate tab pattern (hereinafter referred to as the electrode plate tab pattern forming apparatus 10) may include N pattern forming portions spaced apart at predetermined intervals. However, for better understanding and ease of description, FIG. 1 shows an embodiment where the electrode plate tab pattern forming apparatus 10 may include two pattern forming portions (i.e., the first pattern forming portion 200 and the second pattern forming portion 300).

According to an embodiment, the electrode plate 20 on which the tab pattern is formed may correspond to a positive electrode or a negative electrode. In the case of a positive electrode, the electrode plate 20 may be formed by applying an active material such as a transition metal oxide to a current collector plate formed on a metal foil such as aluminum or an aluminum alloy. In a case where the electrode plate 20 is a negative electrode, the electrode plate 20 may be formed by applying an active material such as graphite or carbon to a current collector plate formed on a metal foil such as copper, a copper alloy, nickel, or a nickel alloy.

In an embodiment, the electrode plate 20 may initially exist in a wound state after being coated with an active material. The electrode plate 20 may be conveyed in the first direction (e.g., X direction) by the conveying portion 100 and may be unwound. The electrode plate 20 may be conveyed in the first direction, and a plurality of first tab patterns 211 and a plurality of second tab patterns 311 may be formed. The first tab patterns 211 and the second tab patterns 311 may be formed on the electrode plate 20, and the electrode plate 20 may be wound at an end of the conveying portion 100.

According to an embodiment, the conveying portion 100 may convey the electrode plate 20 coated with the active material in the first direction (X-axis direction). In an embodiment, the conveying portion 100 may include a plurality of conveying rollers connected to respective driving motors to convey the electrode plate 20 in the first direction. In an embodiment, the conveying portion 100 may include a conveyor belt connected to a driving motor to convey the electrode plate 20 in the first direction, but the present disclosure is not limited thereto.

According to an embodiment, the driving motor that provides power to the conveying roller of the conveying portion 100 and the driving motor that provides power to a buffer roller may be separate configurations or a single configuration having different gear ratios, but the present disclosure is not limited thereto.

According to an embodiment, the rotation speed of the conveying roller of the conveying portion 100 may be inversely proportional to a cycle in which the first pattern forming portion 200 forms the first tab patterns 211 on the electrode plate 20 and a cycle in which the second pattern forming portion 300 forms the second tab patterns 311 on the electrode plate 20. In an embodiment, as the rotation speed of the conveying roller of the conveying portion 100 increases, the conveying speed of the electrode plate 20 in the first direction may increase. Accordingly, the cycle in which the first pattern forming portion 200 forms the first tab patterns 211 on the electrode plate 20 may be reduced, and the cycle in which the second pattern forming portion 300 forms the second tab patterns 311 on the electrode plate 20 may be reduced.

According to an embodiment, the first pattern forming portion 200 may form the first tab patterns 211 on the electrode plate 20. The first tab patterns 211 may include patterns having any shape that indicates the positions where electrode tabs are to be formed on the electrode plate 20.

According to an embodiment, the first pattern forming portion 200 may include a plurality of first laser portions 210. According to an embodiment, the first laser portions 210 may be disposed along a plurality of rows and a plurality of columns at predetermined intervals. The first tab patterns 211 may be formed in rows and columns on the electrode plate 20 corresponding to the rows and columns in which the first laser portions 210 are disposed.

According to an embodiment, the first laser portions 210 may irradiate laser beams on the electrode plate 20 to form the first tab patterns 211 on the electrode plate 20. In an embodiment, a portion of the active material coated on the electrode plate 20 may be peeled off and a plurality of first tab patterns 211 may be formed, but the present disclosure is not limited thereto. In an embodiment, welding may be performed on a boundary area corresponding to the first tab patterns 211 by having the first laser portions 210 irradiate laser beams onto the electrode plate 20.

According to an embodiment, the second pattern forming portion 300 may be disposed to be spaced apart from the first pattern forming portion 200 in the first direction. The second pattern forming portion 300 may form the second tab patterns 311 on the electrode plate 20. The second tab patterns 311 may be formed on the electrode plate 20 and can be spaced apart from the first tab patterns 211 by a preset first distance. The first tab patterns 211 and the second tab patterns 311 may be formed to have the same pattern. However, in a case where the arrangements (for example, rows and columns) of the first laser portions 210 and the second laser portions 310 are different, the first tab patterns 211 and the second tab patterns 311 may be formed to have different patterns.

According to an embodiment, the second pattern forming portion 300 may include a plurality of second laser portions 310. According to an embodiment, the second laser portions 310 may be disposed along a plurality of rows and a plurality of columns at regular intervals. The second tab patterns 311 may be formed in rows and columns on the electrode plate 20 corresponding to the rows and columns in which the second laser portions 310 are disposed.

According to an embodiment, the second laser portions 310 may irradiate laser beams on the electrode plate 20 to form the second tab patterns 311 on the electrode plate 20. In an embodiment, a portion of the active material coated on the electrode plate 20 may be peeled off and a plurality of second tab patterns 311 may be formed, but the present disclosure is not limited thereto.

In an embodiment, a plurality of first tab patterns 211 and a plurality of second tab patterns 311 are formed by dividing the electrode plate 20 into 10 areas. In an embodiment, the first pattern forming portion 200 may form the first tab patterns 211 in the first area, the third area, the fifth area, the seventh area, and the ninth area. The second pattern forming portion 300 may form the second tab patterns 311 in the second area, the fourth area, the sixth area, the eighth area, and the tenth area.

In an embodiment, the first pattern forming portion 200 may be disposed on a path through which the electrode plate 20 is conveyed to form the first tab patterns 211 on the electrode plate 20. In an embodiment, the first area of the electrode plate 20 is disposed under the first pattern forming portion 200, and the first pattern forming portion 200 may form the first tab patterns 211 by irradiating a laser beam onto the first area of the electrode plate 20. In an embodiment, the first area moves in the first direction and the second area of the electrode plate 20 is disposed under the first pattern forming portion 200, and the first pattern forming portion 200 may not irradiate a laser beam onto the electrode plate 20. In an embodiment, the second area moves in the first direction and the third area of the electrode plate 20 is disposed under the first pattern forming portion 200, and the first pattern forming portion 200 may form the first tab patterns 211 by irradiating a laser beam onto the electrode plate 20.

In an embodiment, the second pattern forming portion 300 may be disposed to be spaced apart from the first pattern forming portion 200 on a path through which the electrode plate 20 is conveyed. The second pattern forming portion 300 may be disposed at a rear end of the first pattern forming portion 200 on the path along which the electrode plate 20 is conveyed. The second pattern forming portion 300 may form a second tab pattern 311 in adjacent to and after the first tab pattern 211 is formed on the electrode plate 20. In an embodiment, the first area of the electrode plate 20 is disposed under the second pattern forming portion 300, and the second pattern forming portion 300 may not irradiate a laser beam onto the electrode plate 20. The first tab patterns 211 may be formed in the first area of the electrode plate 20 in the process of passing through the lower side of the first pattern forming portion 200. In an embodiment, the first area of the electrode plate moves in the first direction and the second area of the electrode plate 20 is disposed under the second pattern forming portion 300, and the second pattern forming portion 300 may form the second tab patterns 311 by irradiating a laser beam onto the second area of the electrode plate 20. In an embodiment, the second area of the electrode plate 20 moves in the first direction and the third area of the electrode plate 20 is disposed under the second pattern forming portion 300, and the second pattern forming portion 300 may not irradiate a laser beam onto the electrode plate 20. The first tab patterns 211 may be formed in the third area of the electrode plate 20 in the process of passing through the lower side of the first pattern forming portion 200. By repeating the sequence, the first tab patterns 211 and the second tab patterns 311 may be formed on the electrode plate 20. The first tab patterns 211 formed in the first area and the second tab patterns 311 formed in the second area may be formed to be spaced apart by a preset first distance. The second tab patterns 311 formed in the second area and the first tab patterns 211 formed in the third area may be formed to be spaced apart by a preset first distance. That is, a plurality of adjacent first tab patterns 211 and a plurality of adjacent second tab patterns 311 may be formed to be spaced apart from each other by a preset first distance.

In an embodiment, the first pattern formation portion 200 and the second pattern formation portion 300 may simultaneously form the first tab patterns 211 and the second tab patterns 311, respectively, on the electrode plate 20 disposed thereunder.

In an embodiment, the electrode plate tab pattern forming apparatus 10 may simultaneously form the adjacent first tab patterns 211 and the adjacent second tab patterns 311 at predetermined intervals, thereby improving process efficiency by enabling the formation of the tab patterns 211 and 311 at predetermined intervals on the electrode plate 20.

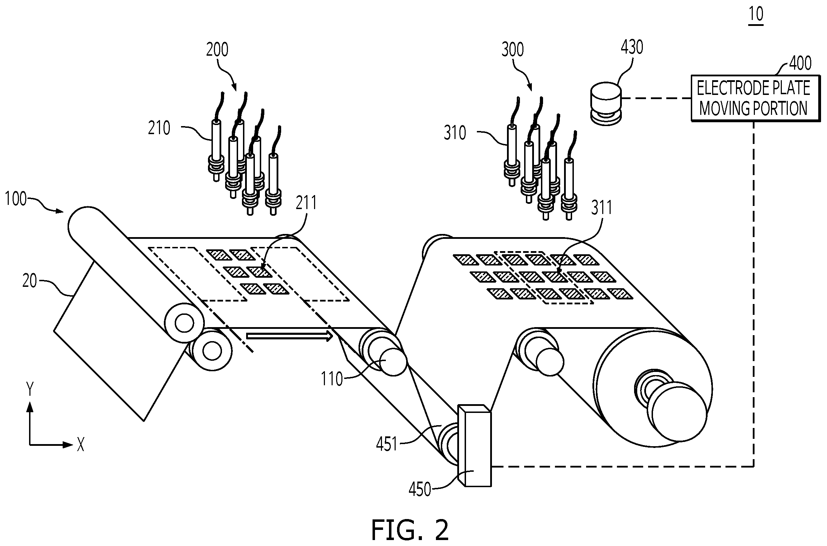

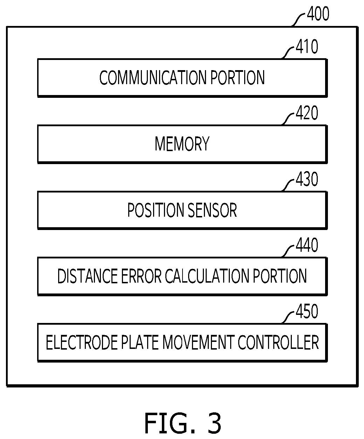

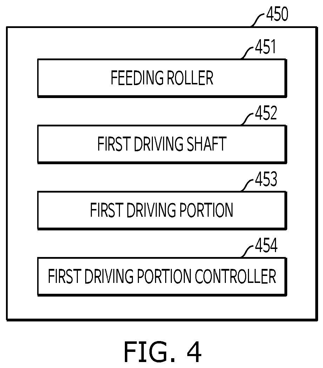

FIG. 2 shows an apparatus 10 for forming an electrode plate tab pattern according to embodiments of the present disclosure. FIG. 3 shows a configuration of an electrode plate moving portion 400 according to embodiments of the present disclosure. FIG. 4 shows a configuration of an electrode plate movement controller 450 according to embodiments of the present disclosure.

Referring to FIG. 2 to FIG. 4, the electrode plate tab pattern forming apparatus 10 may further include an electrode plate moving portion 400.

According to an embodiment, the conveying portion 100 may include a buffer roller 110. The buffer roller 110 may move the electrode plate 20. In an embodiment, the buffer roller 110 may rotate clockwise (e.g., in a fifth direction) to move the electrode plate 20 in the first direction (e.g., X direction). In an embodiment, the buffer roller 110 may rotate counterclockwise (e.g., in a sixth direction) to move the electrode plate 20 in a second direction opposite to the first direction. As used herein, the clockwise (e.g., in the fifth direction) and counterclockwise (e.g., in the sixth direction) directions are for convenience of description based on the electrode plate tab pattern forming apparatus 10 illustrated in FIG. 2, and if the conveying direction of the electrode plate 20 is the second direction, the rotation direction of the buffer roller 110 may be changed.

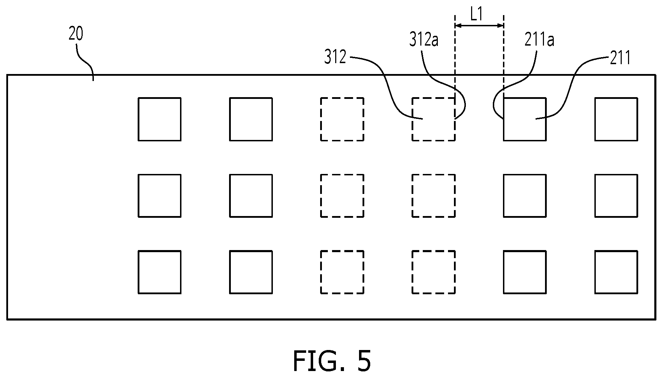

According to an embodiment, the second pattern forming portion 300 may output a signal for specifying a position where the second tab patterns 311 are formed to display a second tab pattern line (see 312 of FIG. 5) on the electrode plate 20. In an embodiment, the second pattern forming portion 300 may output a laser beam that may be detected by a position sensor 430 without damaging the electrode plate 20 to display the second tab pattern line 312 on the electrode plate 20.

According to an embodiment, the electrode plate moving portion 400 may move the electrode plate 20 so that the second tab patterns 311 are formed to be spaced apart from the first tab patterns 211 by a preset first distance. As described in FIG. 1, a plurality of adjacent first tab patterns 211 and a plurality of adjacent second tab patterns 311 should be formed to be accurately spaced apart from each other by a preset first distance. However, due to external factors (for example, disturbance) and the like, the adjacent first tab patterns 211 and the adjacent second tab patterns 311 may have different intervals. Before forming the second tab patterns 311, the electrode plate moving portion 400 may measure the positions where the first tab patterns 211 are formed and the positions where the second tab patterns 311 are to be formed, and then move the electrode plate 20 so that the second tab patterns 311 are formed to be spaced apart from the first tab patterns 211 by a preset first distance. That is, the electrode plate moving portion 400 may adjust the positions of the second tab patterns 311 to be accurately spaced apart from the first tab patterns 211 by a preset first distance.

In an embodiment, the electrode plate moving portion 400 may move the electrode plate 20 in the first direction (e.g., X direction) or the second direction opposite to the first direction. The electrode plate moving portion 400 may move the electrode plate 20 in the first direction or the second direction so that the second tab patterns 311 are formed on the electrode plate 20 to be spaced apart from the first tab patterns 211 by a preset first distance.

According to an embodiment, the electrode plate moving portion 400 may include a communication portion 410, a memory 420, a position sensor 430, a distance error calculation portion 440, and an electrode plate moving controller 450.

According to an embodiment, the communication portion 410 may include a device capable of wired or wireless communication with other components of the electrode plate tab pattern forming apparatus 10. In an embodiment, the communication portion 410 may wirelessly communicate with other components of the electrode plate tap pattern forming apparatus 10 using wireless communication such as Bluetooth, radio frequency identification (RFID), infrared data association (UWB), ultra wideband (UWB), ZigBee, near field communication (NFC), wireless-fidelity (Wi-Fi), and the like, but the present disclosure is not limited thereto. In an embodiment, the communication portion 410 may receive information about the rotation speed of the conveying roller from the conveying portion 100, the positions of the first tab patterns 211 formed on the electrode plate 20 from the position sensor 430, the positions of the second tab pattern lines 312, and the like.

According to an embodiment, the memory 420 may include any non-transitory computer-readable recording medium. In an embodiment, the memory 420 may include a permanent mass storage device such as a read only memory (ROM), a disk drive, a solid state drive (SSD), a flash memory, and the like. The memory 420 may store process information for controlling the moving operation of the electrode plate 20. In an embodiment, the memory 420 may store information about the rotation speed of the conveying roller, information about the preset first distance between the first tab patterns 211 and the second tab patterns 311, and information about the rotation radius and rotation speed of the buffer roller 110, and the vertical movement speed of the feeding roller 451, but the present disclosure is not limited thereto.

According to an embodiment, the position sensor 430 may measure the positions of the first tab patterns 211 and the position of the second tab pattern line 312 formed on the electrode plate 20. The position sensor 430 may include an image sensor capable of capturing the positions of the first tab patterns 211 and the position of the second tab pattern line 312 formed on the electrode plate 20, but the present disclosure is not limited thereto. The position sensor 430 may transmit information on the measured positions of the first tab patterns 211 and the measured position of the second tab pattern line 312 to the distance error calculation portion 440 through the communication portion 410.

According to an embodiment, the distance error calculation portion 440 may measure a second distance between a point (see 211a of FIG. 5) of the first tab patterns 211 and a point (see 311a of FIG. 5) of the second tab pattern line based on the measured positions of the first tab patterns 211 and the measured position of the second tab pattern line 312. The distance error calculation portion 440 may calculate an error between the preset first distance and the measured second distance. A detailed description of the error calculation between the first distance and the second distance is described with reference to FIG. 5 to FIG. 7.

According to an embodiment, the electrode plate movement controller 450 may control the electrode plate 20 to move in the first direction (e.g., X direction) or the second direction opposite to the first direction based on an error between the first distance and the second distance.

According to an embodiment, the electrode plate movement controller 450 may include a feeding roller 451, a first driving shaft 452, a first driving portion 453, and a first driving portion controller 454.

According to an embodiment, the feeding roller 451 may be disposed on the electrode plate 20. The feeding roller 451 may be disposed on the electrode plate 20 between the first pattern forming portion 200 and the second pattern forming portion 300.

According to an embodiment, the feeding roller 451 may move in a third direction that intersects (for example, a direction perpendicular) to the first and second directions. The electrode plate 20 may move in the first direction or the second direction according to the movement path of the feeding roller 451. Depending on the movement path of the feeding roller 451, the buffer roller 110 may rotate clockwise(e.g., in the fifth direction) or counterclockwise(e.g., in the sixth direction), so that the electrode plate 20 may move in the first direction or the second direction.

According to an embodiment, the first driving shaft 452 may be disposed at opposite ends of the feeding roller 451. The first driving shaft 452 may provide a vertical movement path of the feeding roller 451. In an embodiment, the first driving shaft 452 may include a guide formed in a vertical direction.

According to an embodiment, the first driving portion 453 may vertically move the feeding roller 451 upward or downward. The first driving portion 453 may provide power so that the feeding roller 451 may vertically move along the first driving shaft 452.

According to an embodiment, the first driving portion controller 454 may control an operation of the first driving portion 453. The first driving portion controller 454 may control the operation of the first driving portion 453 based on the error between the first distance and the second distance calculated by the distance error calculation portion 440.

In an embodiment, the first driving portion controller 454 may control the operation of the first driving portion 453 to move the feeding roller 451 in the third direction (e.g., Y direction) or a fourth direction opposite thereto.

In an embodiment, the first driving portion 454 may control the first driving portion 453 to move the feeding roller 451 in the third direction. In a case where the feeding roller 451 moves upward in the third direction, tension of the electrode plate 20 may decrease, and the buffer roller 110 may rotate clockwise (e.g., in the fifth direction) to move the electrode plate 20 in the first direction. In an embodiment, the first driving portion controller 454 may control the first driving portion 453 to move the feeding roller 451 in the fourth direction. In a case where the feeding roller 451 moves downward in the fourth direction, the electrode plate 20 may be pressed and tension may increase, and the buffer roller 110 may rotate counterclockwise (e.g., in the sixth direction) to move the electrode plate 20 in the second direction.

FIG. 5 to FIG. 7 each shows calculating the error between the first distance and the second distance according to embodiments of the present disclosure.

Referring to FIG. 1 to FIG. 7, a plurality of first tab patterns 211 may be formed on the electrode plate 20. The second pattern forming portion 300 may output a signal for specifying a position where the second tab patterns 311 are formed to display the second tab pattern line 312 on the electrode plate 20.

According to an embodiment, the position sensor 430 may measure the positions of the first tab patterns 211 and the position of the second tab pattern line 312 formed on the electrode plate 20. The position sensor 430 may be an image sensor capable of capturing the positions of the first tab patterns 211 and the position of the second tab pattern line 312 formed on the electrode plate 20, but the present disclosure is not limited thereto. The position sensor 430 may transmit information on the measured positions of the first tab patterns 211 and the measured position of the second tab pattern line 312 to the distance error calculation portion 440.

According to an embodiment, the distance error calculation portion 440 may measure a second distance between a point 211a of the first tab patterns 211 and a point 312a of the second tab pattern line based on the measured positions of the first tab patterns 211 and the measured position of the second tab pattern line 312. The second distance may be a distance measured at the same position as a reference position for calculating the first distance at which the first tab patterns 211 and the second tab patterns 311 may be formed at regular intervals. In an embodiment, one point 211a of the first tab patterns 211 may be any one position at one end of one area of the first tab patterns 211 adjacent to the second tab pattern lines 312, but the present disclosure is not limited thereto. In an embodiment, one point 312a of the second tab pattern lines may be any one position at one end of one area of the second tab pattern lines 312 adjacent to the first tab patterns 211, but the present disclosure is not limited thereto.

According to an embodiment, the distance error calculation portion 440 may calculate an error between the preset first distance and the measured second distance.

In an embodiment, as shown in FIG. 5, the preset first distance is L1 and the measured second distance is L1, and the distance error calculation portion 440 may calculate the error between the first distance and the second distance as 0. Accordingly, the electrode plate moving portion 400 may not operate the feeding roller 451 so that the electrode plate 20 is not moved. The second pattern forming portion 300 may form the second tab patterns 311 by irradiating a laser beam onto the second tab pattern line 312.

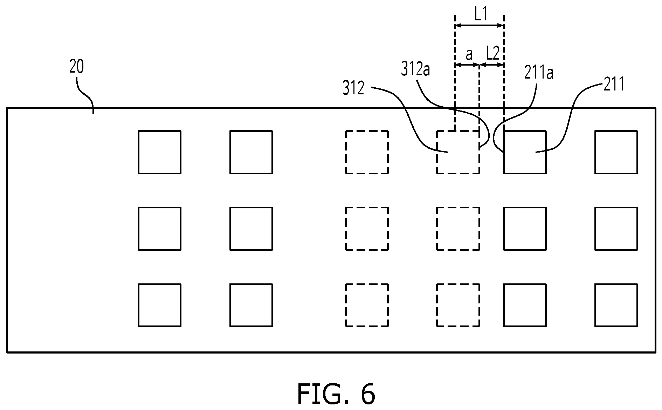

In an embodiment, as shown in FIG. 6, the preset first distance is L1 and the measured second distance is L2, and the distance error calculation portion 440 may calculate the error between the first distance and the second distance as "a". Accordingly, the electrode plate moving portion 400 may move the feeding roller 451 in the third direction so that the electrode plate moves in the first direction by the error "a".

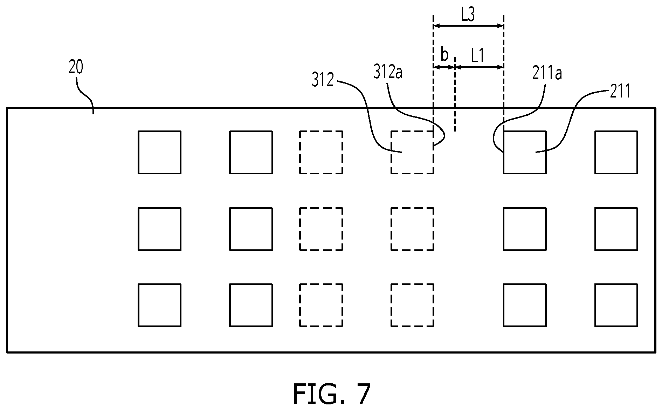

In an embodiment, as shown in FIG. 7, the preset first distance is L1 and the measured second distance is L3, the distance error calculation portion 440 may calculate the error between the first distance and the second distance as "b". Accordingly, the electrode plate moving portion 400 may move the feeding roller 451 in the fourth direction so that the electrode plate moves in the second direction by the error "b".

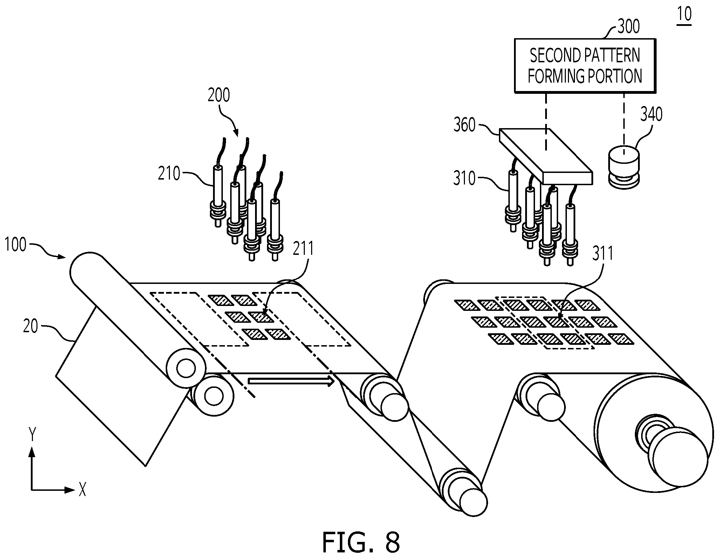

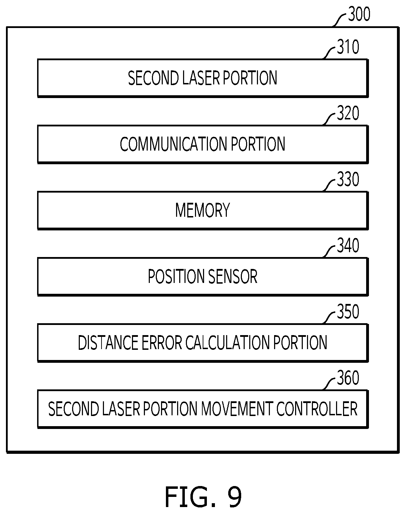

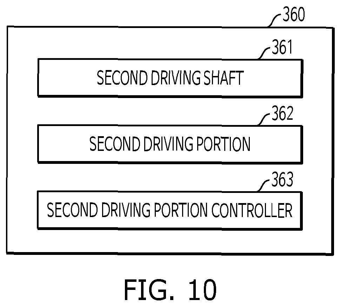

FIG. 8 shows an apparatus 10 for forming an electrode plate tab pattern according to embodiments of the present disclosure. FIG. 9 shows a configuration of a second pattern forming portion 300 according to embodiments of the present disclosure. FIG. 10 shows a configuration of a second laser movement controller 360 according to embodiments of the present disclosure.

Referring to FIG. 8 to FIG. 10, according to the embodiment, the electrode plate tab pattern forming apparatus 10 may include a second pattern forming portion 300 capable of moving a plurality of second laser portions 310.

According to an embodiment, the second pattern forming portion 300 may include a plurality of second laser portions 310, a communication portion 320, a memory 330, a position sensor 340, a distance error calculation portion 350, and a second electrode plate movement controller 360.

According to an embodiment, the second laser portions 310 may irradiate laser beams on the electrode plate 20 to form the second tab patterns 311 on the electrode plate 20. In an embodiment, the second laser portions 310 may irradiate a laser beam onto the electrode plate 20, a portion of the active material coated on the electrode plate 20 may be peeled off and a plurality of second tab patterns 311 may be formed, but the present disclosure is not limited thereto.

According to an embodiment, the second pattern forming portion 300 may output a signal for specifying a position where the second tab patterns 311 are formed to display a second tab pattern line (see 312 of FIG. 5) on the electrode plate 20. In an embodiment, the second pattern forming portion 300 may output a laser beam that may be detected by a position sensor 340 without damaging the electrode plate 20 to display the second tab pattern line 312 on the electrode plate 20.

According to an embodiment, the communication portion 320 may be a device capable of wired or wireless communication with other components of the electrode plate tab pattern forming apparatus 10. In an embodiment, the communication portion 320 may wirelessly communicate with other components of the electrode plate tap pattern forming apparatus 10 using wireless communication such as Bluetooth, radio frequency identification (RFID), infrared data association (UWB), ultra wideband (UWB), ZigBee, near field communication (NFC), wireless-fidelity (Wi-Fi), and the like, but the present disclosure is not limited thereto. In an embodiment, the communication portion 320 may receive information about the rotation speed of the conveying roller from the conveying portion 100, the positions of the first tab patterns 211 formed on the electrode plate 20 from the position sensor 340, the positions of the second tab pattern lines 312, and the like

According to an embodiment, the memory 330 may include any non-transitory computer-readable recording medium. In an embodiment, the memory 330 may include a permanent mass storage device such as a read only memory (ROM), a disk drive, a solid state drive (SSD), a flash memory, and the like. The memory 330 may store process information for controlling the movement of the second laser portions.

According to an embodiment, the position sensor 340 may measure the positions of the first tab patterns 211 and the position of the second tab pattern line 312 formed on the electrode plate 20. The description of the position sensor 340 may be substantially similar to that of the position sensor 430 described with reference to FIG. 2 to FIG. 4.

According to an embodiment, the distance error calculation portion 350 may measure a second distance between a point (see 211a of FIG. 5) of the first tab patterns 211 and a point (see 311a of FIG. 5) of the second tab pattern line based on the measured positions of the first tab patterns 211 and the measured position of the second tab pattern line 312. The distance error calculation portion 350 may calculate an error between the preset first distance and the measured second distance. The description of the distance error calculation portion 350 may be substantially similar to that of the distance error calculation portion 350 described with reference to FIG. 2 to FIG. 4.

The second laser portion movement controller 360 may control the second laser portions 310 to move in the first direction or in the second direction opposite to the first direction based on the error between the first distance and the second distance.

According to an embodiment, the second laser portion movement controller 360 may include a second driving shaft 361, a second driving portion 362, and a second driving portion controller 363.

According to an embodiment, the second driving shaft 361 may be connected to the second laser portions 310. The second driving shaft 361 may provide a horizontal movement path to the second laser portions. The second driving shaft 361 is disposed on the conveying path of the electrode plate 20 to move the second laser portions 310 along the conveying path of the electrode plate 20. In an embodiment, the second driving shaft 361 may include a guide that may be formed parallel to the conveying path of the electrode plate 20 to move the second laser portions 310 in the horizontal direction.

According to an embodiment, the second driving portion 362 may horizontally move the second laser portions 310 in the first direction (e.g., X direction) or the second direction opposite thereto. The second driving portion 362 may provide power so that the second laser portions 310 may move horizontally along the second driving shaft 361.

According to an embodiment, the second driving portion controller 363 may control an operation of the second driving portion 362. The second driving portion controller 363 may control the operation of the second driving portion 362 based on the error between the preset first distance calculated by the distance error calculation portion 350 and the measured second distance.

According to an embodiment, as shown in FIG. 6, the second driving portion controller 363 may control the second driving portion so that the second laser portions 310 move in the second direction in a case where the measured second distance L2 is shorter than the preset first distance L1.

According to an embodiment, as shown in FIG. 7, the second driving portion 363 may control the second driving portion so that the second laser portions 310 move in the first direction, in a case where the second distance L3 is longer than the preset first distance L1.

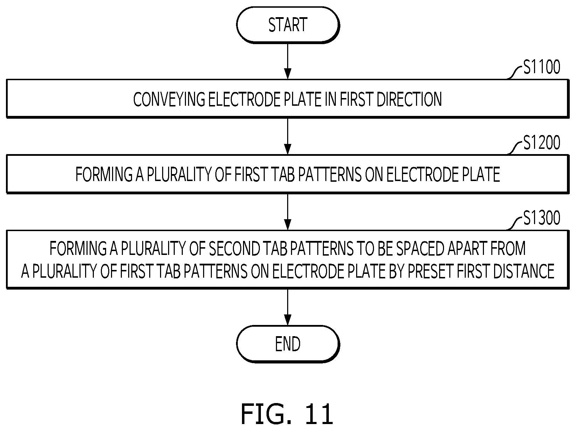

FIG. 11 is a flowchart showing a method for forming an electrode plate tab pattern according to embodiments of the present disclosure.

Referring to FIG. 1 and FIG. 11, the method for forming the electrode plate tab pattern may convey the electrode plate 20 coated with an active material in the first direction (e.g., X direction) by the conveying portion 100 in step S1100.

According to an embodiment, the conveying portion 100 may convey the electrode plate 20 coated with the active material in the first direction (e.g., X direction). In an embodiment, the conveying portion 100 may include a plurality of conveying rollers connected to the driving motor to convey the electrode plate 20 in the first direction. In an embodiment, the conveying portion 100 include a conveyor belt connected to the driving motor to convey the electrode plate 20 in the first direction, but the present disclosure is not limited thereto.

In step S1200, the first tab patterns 211 may be formed on the electrode plate 20 by the first pattern forming portion 200.

According to an embodiment, the first pattern forming portion 200 may form the first tab patterns 211 on the electrode plate 20. The first tab patterns 211 may be patterns having any shape that indicates the positions where electrode tabs are to be formed on the electrode plate 20.

According to an embodiment, the first pattern forming portion 200 may include a plurality of first laser portions 210. According to an embodiment, the first laser portions 210 may be disposed along a plurality of rows and a plurality of columns at predetermined intervals. The first tab patterns 211 may be formed in rows and columns on the electrode plate 20 according to the rows and columns in which the first laser portions 210 are disposed.

According to an embodiment, the first laser portions 210 may irradiate laser beams on the electrode plate 20 to form the first tab patterns 211 on the electrode plate 20. In an embodiment, the first laser portions 210 may irradiate a laser beam onto the electrode plate 20, a portion of the active material coated on the electrode plate 20 may be peeled off, and a plurality of first tab patterns 211 may be formed, but the present disclosure is not limited thereto. In an embodiment, welding may be performed on a boundary area corresponding to the first tab patterns 211 by having the first laser portions 210 irradiate laser beams onto the electrode plate 20.

In step S1300, a plurality of second tab patterns 311 may be formed by the second pattern forming part 300 to be spaced apart from the first tab patterns 211 on the electrode plate 20 by the preset first distance.

According to an embodiment, the second pattern forming portion 300 may be disposed to be spaced apart from the first pattern forming portion 200 in the first direction. The second pattern forming portion 300 may form the second tab patterns 311 on the electrode plate 20. The second tab patterns 311 may be formed on the electrode plate 20 to be spaced apart from the first tab patterns 211 by a preset first distance. The first tab patterns 211 and the second tab patterns 311 may be formed to have the same pattern. However, in a case where the arrangements (for example, rows and columns) of the first laser portions 210 and the second laser portions 310 are different, the first tab patterns 211 and the second tab patterns 311 may be formed to have different patterns.

According to an embodiment, the second pattern forming portion 300 may include a plurality of second laser portions 310. According to an embodiment, the second laser portions 310 may be disposed along a plurality of rows and a plurality of columns at regular intervals. The second tab patterns 311 may be formed in rows and columns on the electrode plate 20 according to the rows and columns in which the second laser portions 310 are disposed.

According to an embodiment, the second laser portions 310 may irradiate laser beams on the electrode plate 20 to form the second tab patterns 311 on the electrode plate 20. In an embodiment, the second laser portions 310 may irradiate a laser beam onto the electrode plate 20, a portion of the active material coated on the electrode plate 20 may be peeled off, and a plurality of second tab patterns 311 may be formed, but the present disclosure is not limited thereto.

The method for forming a plate tab pattern may simultaneously form the first tab patterns 211 and the second tab patterns 311 at predetermined intervals, thereby improving process efficiency by enabling the formation of the tab patterns 211 and 311 at predetermined intervals on the electrode plate 20.

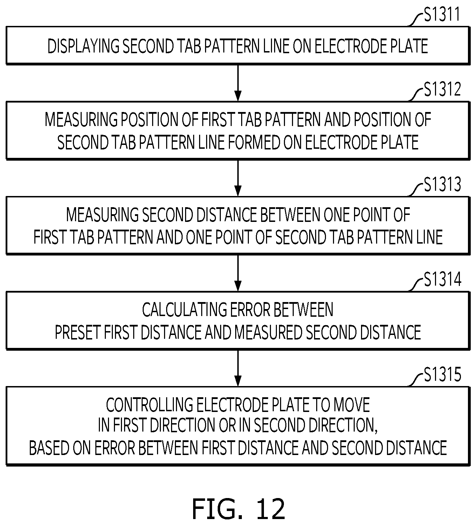

FIG. 12 is a flowchart showing a method for forming a second tab pattern on an electrode plate according to embodiments of the present disclosure.

Referring to FIG. 2 to FIG. 4 and FIG. 12, the method for forming the second tab patterns, in step S1311, includes the second pattern forming portion 300 outputting a signal for specifying a position where the second tab patterns 311 are formed to display the second tab pattern line 312 on the electrode plate 20.

In step S1312, the position sensor 430 may measure the positions of the first tab patterns 211 and the position of the second tab pattern line 312 formed on the electrode plate 20. The position sensor 430 may include an image sensor capable of capturing the positions of the first tab patterns 211 and the position of the second tab pattern line 312 formed on the electrode plate 20, but the present disclosure is not limited thereto. The position sensor 430 may transmit information on the measured positions of the first tab patterns 211 and the measured positions of the second tab pattern line 312 to the distance error calculation portion 440 through the communication portion 410.

In step S1313, the distance error calculation portion 440 may measure a second distance between one point of the first tab patterns and one point of the second tab pattern line based on the measured positions of the first tab patterns and the position of the second tab pattern line.

In step S1314, the distance error calculation portion 440 may calculate an error between the preset first distance and the measured second distance. The method for calculating the error between the preset first distance and the measured second distance is described with reference to FIG. 5 to FIG. 7.

In step S1315, the electrode plate movement controller 450 may control the electrode plate 20 to move in the first direction or the second direction opposite to the first direction based on an error between the first distance and the second distance.

According to an embodiment, the conveying 100 may include a buffer roller 110. The buffer roller 110 may move the electrode plate 20. The buffer roller 110 may rotate clockwise(e.g., in the fifth direction) to move the electrode plate 20 in the first direction (e.g., X direction). The buffer roller 110 may rotate counterclockwise(e.g., in the sixth direction) to move the electrode plate 20 in a second direction opposite to the first direction.

According to an embodiment, a method of controlling movement of the electrode plate 20 may include disposing the feeding roller 451 on the electrode plate 20. The feeding roller 451 may be disposed on the electrode plate 20 between the first pattern forming portion 200 and the second pattern forming portion 300.

According to an embodiment, the feeding roller 451 may move in a third direction that intersects (for example, in a direction perpendicular) to the first and second directions. The electrode plate 20 may move in the first direction or the second direction according to the movement path of the feeding roller 451. Depending on the movement path of the feeding roller 451, the buffer roller 110 may rotate clockwise (e.g., in the fifth direction) or counterclockwise (e.g., in the sixth direction), so that the electrode plate 20 may move in the first direction or the second direction.

In an embodiment, the first driving portion 454 may control the first driving portion 453 to move the feeding roller 451 in the third direction. In an embodiment, the feeding roller 451 moves upward in the third direction, tension of the electrode plate 20 may decrease, and the buffer roller 110 may rotate clockwise (e.g., in the fifth direction) to move the electrode plate 20 in the first direction. In an embodiment, the first driving portion controller 454 may control the first driving portion 453 to move the feeding roller 451 in the fourth direction. In an embodiment, the feeding roller 451 moves downward in the fourth direction, the electrode plate 20 may be pressed, tension may increase, and the buffer roller 110 may rotate counterclockwise (e.g., in the sixth direction) to move the electrode plate 20 in the second direction.

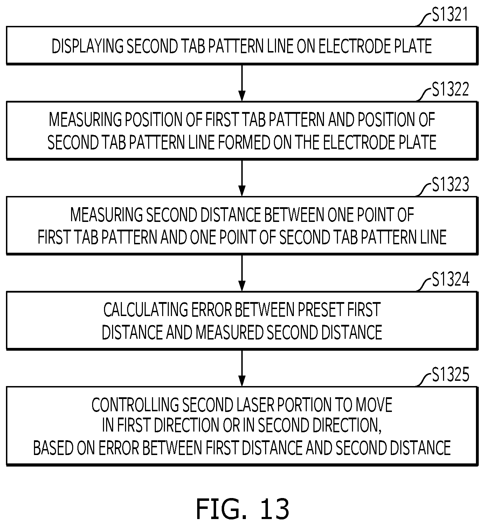

FIG. 13 is a flowchart showing a method for forming a second tab pattern on an electrode plate according to embodiments of the present disclosure.

Referring to FIG. 8 to FIG. 10 and FIG. 13, the method for forming the second tab patterns, in step S1321, includes the second pattern forming portion 300 outputting a signal for specifying a position where the second tab patterns 311 are formed to display the second tab pattern line 312 on the electrode plate 20.

In step S1322, the position sensor 340 may measure the positions of the first tab patterns 211 and the position of the second tab pattern line 312 formed on the electrode plate 20.

In step S1323, the distance error calculation portion 350 may measure a second distance between one point of the first tab patterns and one point of the second tab pattern line based on the measured positions of the first tab patterns and the position of the second tab pattern line.

In step S1324, the distance error calculation portion 350 may calculate an error between the preset first distance and the measured second distance.

Step S1321 to step S1324 are substantially the same as step S1311 to step S1314 described with reference to FIG. 12.

In step 1325, the second pattern forming portion 300 may control the second laser portions 310 included in the second pattern forming portion 300 to move in the first direction or in the second direction opposite to the first direction, based on the error between the preset first distance and the measured second distance. According to an embodiment, as shown in FIG. 6, the second pattern forming portion 300 may control the second laser portions 310 to move in the second direction in a case where the measured second distance L2 is shorter than the preset first distance L1.

According to an embodiment, as shown in FIG. 7, the second pattern forming portion 300 may control the second laser portions 310 to move in the first direction, in a case where the second distance L3 is longer than the preset first distance L1.

Although the present disclosure has been described above with respect to embodiments thereof, the present disclosure is not limited thereto. Various modifications and variations can be made thereto by those skilled in the art within the scopeof the present invention as defined by the claims.

### <Description of Notable Reference Symbols>

10: apparatus for forming electrode plate tab pattern
20: electrode plate
100: conveying portion
200: first pattern forming portion
210: first laser portion
211: first tab pattern
300: second pattern forming portion
310: second laser portion
311: second tab pattern

## Claims

1. An apparatus (10) for forming an electrode plate tab pattern, comprising:
a conveying portion (100) configured to convey, in a first direction, an electrode plate (20) coated with an active material;
a first pattern forming portion (200) configured to form a first tab pattern (211) on the electrode plate (20); and
a second pattern forming portion (300) configured to form a second tab pattern (311) on the electrode plate (20),
wherein the first tab pattern (211) and the second tab pattern (311) are configured to be spaced apart from each other by a preset first distance.

2. The apparatus (10) as claimed in claim 1, wherein
(A) the second pattern forming portion (300) is spaced apart from the first pattern forming portion (200) in the first direction; and/or
(B) the first tab pattern (211) and the second tab pattern (311) have substantially the same pattern; and/or
(C) the first pattern forming portion includes a plurality of first laser portions disposed along a plurality of rows and a plurality of columns

3. The apparatus (10) as claimed in claim 1 or claim 2, further comprising:
an electrode plate moving portion (400) configured to move the electrode plate (20) so that the second tab pattern (311) is configured to be spaced apart from the first tab pattern (211) by the preset first distance.

4. The apparatus (10) as claimed in claim 3, wherein the electrode plate moving portion (400) moves the electrode plate (20) in the first direction or a second direction opposite to the first direction.

5. The apparatus (10) as claimed in claim 3 or claim 4, wherein the second pattern forming portion (300) is configured to output a position of the second tap pattern (311) via a second tab pattern line (312) on the electrode plate (20), and
wherein the electrode plate moving portion (400) comprises:
a position sensor (430) configured to measure a position of the first tab pattern (211) and a position of the second tab pattern line (312);
a distance error calculation portion (440) configured to measure a second distance between a point of the first tab pattern (211) and a point of the second tab pattern line (312) and configured to calculate an error between the preset first distance and the second distance; and
an electrode plate movement controller (450) configured to control the electrode plate (20) to move in the first direction or a second direction opposite to the first direction based on the error.

6. The apparatus (10) as claimed in claim 5, wherein the electrode plate movement controller (450) comprises:
a feeding roller (451) configured to be disposed on the electrode plate (20) and move in a third direction perpendicular to the first direction;
a first driving shaft (452) positioned at an end of the feeding roller (451) and configured to provide a vertical movement path of the feeding roller (451);
a first driving portion (453) configured to drive the feeding roller (451) upward in the third direction or downward in a fourth direction; and
a first driving portion controller (454) configured to control the first driving portion (453) based on the error.

7. The apparatus (10) as claimed in claim 6, wherein
(A) the conveying portion (100) comprises a buffer roller (110) configured to convey the electrode plate (20), in the first direction, by rotating in a fifth direction, and wherein the electrode plate movement controller (450) is configured to move the feeding roller (451) upward in the third direction to rotate the buffer roller (110) in the fifth direction; and/or
(B) the second distance is shorter than the preset first distance, and wherein the feeding roller moves upward in the third direction.

8. The apparatus (10) as claimed in claim 6 or claim 7, wherein
(A) the conveying portion (100) comprises a buffer roller (110) configured to convey the electrode plate (20), in the second direction, by rotating in a sixth direction, and wherein the electrode plate movement controller (450) moves the feeding roller (451) downward in the fourth direction to rotate the buffer roller (110) in the sixth direction; and/or
(B) the second distance is longer than the preset first distance, and wherein the feeding roller moves downward in the fourth direction.

9. The apparatus (10) as claimed in any preceding claim, wherein the second pattern forming portion (300) comprises:
a plurality of second laser portions (310) disposed along a plurality of rows and a plurality of columns and configured to output a position of the second tab pattern (311) via a second tab pattern line (312) on the electrode plate (20);
a position sensor (340) configured to measure a position of the first tab pattern (211) and a position of the second tab pattern line (312);
a distance error calculation portion (350) configured to measure a second distance between a point of the first tab pattern (211) and a point of the second tab pattern line (312) and configured to calculate an error between the preset first distance and the second distance; and
a second laser portion movement controller (360) configured to control the plurality of second laser portions (310) to move in the first direction or a second direction opposite to the first direction based on the error.

10. The apparatus (10) as claimed in claim 9, wherein the second laser portion movement controller (360) comprises:
a second driving shaft (361) connected to the plurality of second laser portions (310) and configured to provide a horizontal movement path to the plurality of second laser portions (310);
a second driving portion (362) configured to drive the plurality of second laser portions (310) in the first direction or the second direction; and
a second driving portion controller (363) configured to control the second driving portion (362) based on the error.

11. The apparatus (10) as claimed in claim 10, wherein when the second distance is shorter than the preset first distance, the plurality of second laser portion (310) moves in the second direction, and, optionally,
when the second distance is longer than the preset first distance, the plurality of second laser portions moves (310) in the first direction.

12. A method for forming an electrode plate tab pattern, comprising:
conveying, in a first direction via a conveying portion (100), an electrode plate (20) coated with an active material;
forming, via a first pattern forming portion (200), a first tab pattern (211) on the electrode plate (20); and
forming, via a second pattern forming portion (300), a second tab pattern (311) on the electrode plate (20),
wherein the first tab pattern (211) and the second tab pattern (311) are spaced apart by a preset first distance.

13. The method as claimed in claim 12, wherein the forming the second tab pattern (311) comprises:
outputting a position of the second tab pattern (311) via a second tab pattern line (312) on the electrode plate (20);
measuring a position of the first tab pattern (211) and a position of the second tab pattern line (312);
measuring a second distance between a point of the first tab pattern (211) and a point of the second tab pattern line (312) and calculating an error between the preset first distance and the second distance; and
controlling the electrode plate (20) to move in the first direction or a second direction opposite to the first direction based on the error.

14. The method as claimed in claim 13, wherein the conveying portion (100) comprises a buffer roller (110) conveying the electrode plate (20) in the first direction or the second direction, and
wherein the controlling comprises:
disposing a feeding roller (451) that moves in a third direction perpendicular to the first direction; and
moving the feeding roller (451) in the third direction or in a fourth direction opposite to the third direction based on the error.

15. The method as claimed in any of claims 12 to 14, wherein the forming of the second tab pattern (311) comprises:
outputting a position of the second tab pattern (311) via a second tab pattern line (312) on the electrode plate (20);
measuring a position of the first tab pattern (211) and a position of the second tab pattern line (312);
measuring a second distance between a point of the first tab pattern (211) and a point of the second tab pattern line (312) and calculating an error between the preset first distance and the second distance; and
controlling a plurality of second laser portions (310) comprised in the second pattern forming portion (300) to move in the first direction or a second direction opposite to the first direction based on the error.
